(19)

**Europäisches Patentamt**
**European Patent Office**
**Office européen des brevets**

(11) **EP 4 723 241 A1**

(12) **EUROPEAN PATENT APPLICATION**
published in accordance with Art. 153(4) EPC

(43) Date of publication:
**08.04.2026 Bulletin 2026/15**

(21) Application number: **24815793.5**

(22) Date of filing: **23.05.2024**

(51) International Patent Classification (IPC):
*H01M 4/583* (2010.01)      *H01M 4/36* (2006.01)
*H01M 4/48* (2010.01)       *H01M 4/587* (2010.01)
*H01M 4/38* (2006.01)       *C01B 32/21* (2017.01)
*H01M 4/133* (2010.01)      *H01M 4/134* (2010.01)
*H01M 10/052* (2010.01)     *H01M 4/02* (2006.01)

(52) Cooperative Patent Classification (CPC):
Y02E 60/10

(86) International application number:
**PCT/KR2024/007027**

(87) International publication number:
**WO 2024/248417 (05.12.2024 Gazette 2024/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.05.2023 KR 20230070356**

(71) Applicant: **Posco Future M Co., Ltd.
Pohang-si, Gyeongsangbuk-do 37918 (KR)**

(72) Inventors:
• **LEE, Kyoungmuk
Cheonan-si, Chungcheongnam-do 31207 (KR)**
• **KANG, Su Hee
Cheonan-si, Chungcheongnam-do 31177 (KR)**
• **JUNG, Su Yeon
Cheonan-si, Chungcheongnam-do 31197 (KR)**

• **LEE, Heon Young
Asan-si, Chungcheongnam-do 31465 (KR)**
• **SHIN, Myoungsoo
Cheongju-si, Chungcheongbuk-do 28165 (KR)**
• **LEE, Se Hyun
Cheonan-si Chungcheongnam-do 31131 (KR)**
• **KWON, Haejun
Cheonan-si, Chungcheongnam-do 31197 (KR)**
• **AHN, Kihong
Sejong 30153 (KR)**
• **KIM, Sumin
Cheonan-si, Chungcheongnam-do 31197 (KR)**
• **JUNG, Jikwon
Cheonan-si, Chungcheongnam-do 31199 (KR)**
• **LEE, Gaeul
Cheonan-si, Chungcheongnam-do 31079 (KR)**

(74) Representative: **Meissner Bolte Partnerschaft
mbB
Patentanwälte Rechtsanwälte
Postfach 86 06 24
81633 München (DE)**

(54) **ANODE ACTIVE MATERIAL FOR LITHIUM SECONDARY BATTERY, MANUFACTURING METHOD THEREFOR, AND LITHIUM SECONDARY BATTERY COMPRISING SAME**

(57) The present invention relates to a negative electrode active material for a lithium secondary battery comprising natural graphite, wherein the natural graphite satisfies Equation 1.

EP 4 723 241 A1

## Description

[Technical Field]

The present invention relates to a negative electrode active material for a lithium secondary battery, a method for manufacturing the same, and a lithium secondary battery including the same.

[Background]

With the increasing development and demand for mobile devices, the demand for rechargeable secondary batteries that are capable of miniaturization and high capacity has been rapidly growing. Recently, the use of secondary batteries as power sources for hybrid electric vehicles (HEVs) and electric vehicles (EVs) has become a practical reality.
Accordingly, extensive research has been conducted on secondary batteries that can meet various performance requirements, and in particular, there is a growing demand for lithium secondary batteries having high energy density, high discharge voltage, and high output characteristics. In addition, lithium secondary batteries used in electric vehicles are required not only to exhibit high energy density and high output within a short period of time, but also to maintain long-term performance under harsh conditions where charge and discharge cycles with large current are repeatedly performed in a short time, for a period of ten years or more. Therefore, such batteries are necessarily required to have significantly superior output characteristics and long-term cycle life compared to conventional small-sized lithium secondary batteries.
In particular, as the demand for high energy density batteries has recently increased, active research has been conducted on methods of increasing the capacity by using silicon-based materials such as Si, Si-C composites, or $SiO_x$, which exhibit capacities ten times greater than graphite-based materials, as negative electrode active materials. However, in the case of silicon-based materials, although they exhibit excellent capacity characteristics compared to conventional graphite, their volume expands rapidly during charging, leading to the breakage of conductive pathways and resulting in deterioration of battery performance and shortened cycle life.
Accordingly, there is a need for research on mixed negative electrode active materials comprising graphite and silicon-based materials that can appropriately ensure both capacity and lifespan characteristics of the battery.

[Detailed Description of the Invention]

[Technical Problem]

Therefore, an object of the present invention is to provide a negative electrode active material for a lithium secondary battery, a method for manufacturing the same, and a lithium secondary battery including the same, which can appropriately ensure both capacity and lifespan characteristics of the battery.

[Technical Solution]

According to one embodiment of the present invention, there is provided a negative electrode active material for a lithium secondary battery comprising natural graphite, wherein the natural graphite satisfies the following Equation 1:

$$[\text{Equation 1}]$$

$$0.04 \text{ g/cm}^3 \leq D_{press} - D_{tap} \leq 0.085 \text{ g/cm}^3$$

wherein $D_{press}$ represents the compression density of the natural graphite under an applied pressure of 5.5 kgf/cm², and $D_{tap}$ represents the tap density of the natural graphite.
The pH of the natural graphite may be 7.0 or higher.
The natural graphite may not include a coating layer containing a low-crystallinity carbon material on the surface thereof.
The natural graphite may have a BET specific surface area of 4.8 m²/g or greater.
The natural graphite may have an oil absorption of 50.0 mL/100 g or greater.
The natural graphite may have an average particle diameter ($D_{50}$) in the range of 16.0 μm to 21.0 μm.
The natural graphite may have a tap density of 0.95 g/cm³ or less.
The natural graphite may have a sphericity of 0.85 or greater.
The negative electrode active material for a lithium secondary battery may further comprise a silicon-based active material.

The silicon-based active material may be silicon, a silicon-carbon composite, silicon oxide, or a combination thereof.

According to another embodiment of the present invention, there is provided a method for manufacturing a negative electrode active material for a lithium secondary battery, comprising: preparing a natural graphite powder; and heat-treating the natural graphite powder at a temperature of 500°C to 650°C under an inert gas atmosphere.

The inert gas may be nitrogen.

The heat treatment may be performed for 1 to 12 hours.

The method may further comprise, after the heat-treating step, mixing a silicon-based active material.

The silicon-based active material may be silicon, a silicon-carbon composite, silicon oxide, or a combination thereof.

According to another embodiment of the present invention, there is provided a negative electrode for a lithium secondary battery comprising the above-described negative electrode active material.

According to yet another embodiment of the present invention, there is provided a lithium secondary battery comprising the negative electrode for a lithium secondary battery described above.

[Effects of the Invention]

The negative electrode active material for a lithium secondary battery according to an embodiment of the present invention can improve the capacity and cycle-life characteristics of the battery by appropriately controlling the physical properties represented by Equation 1.

[Mode for Carrying Out the Invention]

The terms such as "first," "second," and "third," and the like, are used herein to describe various parts, components, regions, layers, and/or sections, but are not limited thereto. These terms are merely used to distinguish one part, component, region, layer, or section from another part, component, region, layer, or section. Therefore, a first part, component, region, layer, or section described below may also be referred to as a second part, component, region, layer, or section within the scope of the present invention.

The terminology used herein is intended solely for the purpose of describing specific embodiments and is not intended to limit the present invention. The singular forms used herein are intended to include plural forms as well, unless the context clearly indicates otherwise. The term "comprising/containing/including" as used in the specification specifies the presence of stated features, regions, integers, steps, operations, elements, and/or components, but does not preclude the presence or addition of one or more other features, regions, integers, steps, operations, elements, and/or components.

When a portion is referred to as being "on" or "above" another portion, it may be directly on or above the other portion or there may be intervening portions therebetween. In contrast, when a portion is referred to as being "directly on" another portion, there are no intervening portions between them.

Unless otherwise defined, all technical and scientific terms used herein have the same meaning as commonly understood by one of ordinary skill in the art to which this invention pertains. Terms defined in commonly used dictionaries are to be interpreted in a manner consistent with the context of the related art and the present disclosure, and are not to be interpreted in an idealized or overly formal sense unless specifically defined otherwise.

In addition, unless otherwise specified, "%" refers to weight percent, and "1 ppm" corresponds to 0.0001 weight percent.

In this specification, the term "combinations thereof" as used in a Markush expression means any mixture or combination of one or more selected from the group consisting of the components listed in the Markush expression, and refers to the inclusion of one or more of the components selected from the group.

Hereinafter, exemplary embodiments of the present invention will be described in detail to enable those skilled in the art to which the invention pertains to easily carry out the invention. However, the present invention may be embodied in various different forms, and is not limited to the embodiments described herein.

**1. Negative Electrode Active Material**

Recently, with the accelerated development of lithium secondary batteries for electric vehicles, the demand for high-energy-density batteries has been increasing. Accordingly, active research has been conducted on methods of increasing capacity by mixing silicon-based active materials such as Si, Si-C composites, or $SiO_x$, which have a capacity more than ten times greater than that of conventional natural graphite-based active materials commonly used as negative electrode active materials.

However, although silicon-based active materials exhibit excellent capacity characteristics compared to conventional graphite, they have a problem in that, during repeated charge and discharge cycles, the material undergoes rapid volume expansion, which breaks the conductive pathways and causes deterioration in cycle-life characteristics.

In addition, conventional natural graphite-based active materials have generally been coated with low-crystallinity carbon materials such as soft carbon or hard carbon for the purpose of suppressing side reactions with the electrolyte and improving output and cycle-life characteristics. However, such low-crystallinity carbon-coated natural graphite tends to have increased particle hardness due to the coating, and thus, when used in combination with silicon-based active materials, it cannot sufficiently buffer the volume expansion of the silicon-based active materials during charge and discharge, resulting in deterioration of capacity, initial efficiency, and cycle-life characteristics.

Accordingly, the inventors of the present invention conducted extensive studies on the physical properties of natural graphite suitable for use in combination with silicon-based active materials and capable of achieving excellent capacity and cycle-life characteristics. As a result, they discovered that when the softness property of the natural graphite powder satisfies a specific range represented by Equation 1 below, the aforementioned effects can be effectively achieved, thereby completing the present invention.

One embodiment of the present invention provides a negative electrode active material for a lithium secondary battery comprising natural graphite, wherein the natural graphite satisfies the following Equation 1:

$$[\text{Equation 1}]$$

$$0.04 \text{ g/cm}^3 \leq D_{press} - D_{tap} \leq 0.085 \text{ g/cm}^3$$

wherein $D_{press}$ represents the compression density of the natural graphite under an applied pressure of 5.5 kgf/cm², and $D_{tap}$ represents the tap density of the natural graphite. In the present specification, the compression density of the natural graphite may be measured by loading 2 g of the active material powder into a circular mold having a diameter of 2 cm² and applying a specific pressure thereto. The tap density of the natural graphite may be measured in accordance with ASTM B527 by placing 15 g of the active material powder in a 50 mL container and tapping it at 3000 cycles @ 284 cycles/min to determine the packing density.

When the natural graphite satisfies the above Equation 1, the capacity and cycle-life characteristics of the battery can be improved.

The value of Equation 1 represents the softness property of the active material powder; specifically, the larger the value of Equation 1, the greater the softness of the active material powder. When the value of Equation 1 of the natural graphite is sufficiently large within the above range, the natural graphite can absorb the pressure generated by the volume expansion of the silicon-based active material during charge and discharge by compressing itself, thereby reducing the overall volumetric expansion ratio of the electrode. As a result, the capacity and cycle-life characteristics of the battery can be improved. However, if the value of Equation 1 of the natural graphite is excessively large, the graphite may remain in an overly compressed state during electrode fabrication, which may instead deteriorate the capacity and cycle-life characteristics of the battery.

More specifically, the value of Equation 1 may be in the range of 0.05 to 0.085 g/cm³, or 0.06 to 0.085 g/cm³.

The natural graphite may have a pH of 7.0 or higher, and more specifically, 7.1 or 7.2 or higher. When the pH of the natural graphite satisfies the above range, acidic groups present on the surface of the natural graphite can be removed, thereby improving the capacity and cycle-life characteristics of the battery. In the present specification, the pH of the natural graphite may be measured by dispersing 10 g of the active material powder in 100 mL of distilled water using an ultrasonic cleaner for 30 minutes and then measuring the separated supernatant using a pH meter (Metrohm, 780 pH meter).

The natural graphite may have a BET specific surface area of 4.8 m²/g or greater, and more specifically, 4.82 m²/g or greater. When the BET specific surface area of the natural graphite satisfies the above range, an appropriate pore structure can be maintained to preserve softness, thereby suppressing electrode volume expansion during charge and discharge when mixed with a silicon-based active material, resulting in improved capacity and cycle-life characteristics of the battery. The BET specific surface area of the natural graphite may be measured using a surface area and porosity analyzer (Micromeritics, ASAP 2020) according to the BET method.

The natural graphite may have an oil absorption of 50.0 mL/100 g or greater, and more specifically, 51.0 mL/100 g or 52.0 mL/100 g or greater. When the oil absorption of the natural graphite satisfies the above range, electrolyte impregnation and lithium-ion conductivity can be enhanced, thereby improving the capacity and cycle-life characteristics of the battery. In the present specification, the oil absorption of the natural graphite may be measured by adding 30 g of the active material powder and linseed oil (ASAHI SOUKEN, S-500).

The natural graphite may have an average particle diameter ($D_{50}$) of 16.0 to 21.0 μm, and more specifically, 17.0 to 20.0 μm. When the average particle diameter of the natural graphite is too small, an increased amount of binder may be required during electrode fabrication, or the electrode adhesion may deteriorate under identical conditions. Conversely, when the average particle diameter is too large, the lithium diffusion distance increases, resulting in deterioration of the input/output characteristics. The average particle diameter ($D_{50}$) refers to the particle diameter corresponding to 50% of the cumulative volume in a particle size distribution curve, and it may be measured, for example, by a laser diffraction method.

The natural graphite may have a tap density of 0.95 g/cm$^3$ or less, and more specifically, 0.93 g/cm$^3$ or less. Generally, higher tap density is desirable to maximize electrode energy density. However, in the present invention, maintaining the tap density within the above range allows the active material powder to retain a soft state, thereby effectively buffering the volume expansion of the silicon-based active material and achieving the aforementioned improvements in battery performance.

The natural graphite may have a sphericity of 0.85 or greater. When the sphericity of the natural graphite satisfies the above range, the layered planes of the graphite are oriented in various directions, thereby further maximizing the capacity and output characteristics and improving the electrode energy density. In the present specification, sphericity refers to a numerical value representing how closely the shape of a particle approximates a sphere, defined as the ratio of the circumference of a circle having the same projected area as the particle image to the actual perimeter of the projected particle image. This sphericity may be measured using an optical imaging particle analyzer (Fluid Imaging Technologies, FlowCam 8100) and analysis software (Visual Spreadsheet).

The negative electrode active material for a lithium secondary battery according to the present invention may not include a coating layer containing a low-crystallinity carbon material on the surface of the natural graphite. The technical significance of excluding such a coating layer has been described above and will not be repeated here.

The negative electrode active material for a lithium secondary battery may further comprise a silicon-based active material. The silicon-based active material is not particularly limited as long as it is commonly used in the art, and examples thereof include silicon, a silicon-carbon composite, silicon oxide, or a combination thereof, but are not limited thereto.

**2. Method for Manufacturing Negative Electrode Active Material**

Another embodiment of the present invention provides a method for manufacturing a negative electrode active material for a lithium secondary battery, comprising: preparing a natural graphite powder; and heat-treating the natural graphite powder at a temperature of 500°C to 650°C under an inert gas atmosphere.

Hereinafter, the method for manufacturing a negative electrode active material for a lithium secondary battery according to one embodiment of the present invention will be described in detail step by step.

First, a natural graphite powder is prepared.

The prepared natural graphite may be a primary-spheronized natural graphite raw powder. The primary spheronization may be carried out by a general spheronization process for converting a plate-shaped natural graphite raw powder into a spherical form, so that the spheronized graphite can be used in the production of the negative electrode active material.

Next, the natural graphite powder is heat-treated at a temperature of 500°C to 650°C under an inert gas atmosphere.

The inert gas is not particularly limited but may specifically be nitrogen. When nitrogen is used as the inert gas, the surface of the graphite can remain in a stable state without oxidation.

The heat treatment is performed at a temperature of 500°C to 650°C, and more specifically at 550°C to 650°C. If the heat treatment temperature is too low, the pH remains low, resulting in inferior cycle-life characteristics. Conversely, if the heat treatment temperature is too high, the specific surface area increases while the oil absorption decreases, causing increased side reactions in the battery and deterioration in cycle-life characteristics.

The heat treatment may be carried out for 1 to 12 hours, and more specifically for 3 to 11 hours. If the heat treatment time is too short, the reaction time becomes insufficient, and the pH remains low, leading to deterioration in cycle-life characteristics. If the heat treatment time is excessively long, although the performance difference may be negligible, productivity and manufacturing costs may increase.

By appropriately controlling the gas atmosphere, heat treatment temperature, and heat treatment time as described above, the physical properties of the obtained negative electrode active material, including the parameter defined in Equation 1, can be easily adjusted to fall within the ranges defined by the present invention. As a result, the capacity and cycle-life characteristics of the battery can be improved.

In some embodiments, the method may further comprise, after the heat-treating step, mixing a silicon-based active material.

The silicon-based active material is not particularly limited as long as it is commonly used in the art, and examples thereof include silicon, a silicon-carbon composite, silicon oxide, or a combination thereof, but are not limited thereto.

**3. Negative Electrode and Lithium Secondary Battery**

Another embodiment of the present invention provides a negative electrode for a lithium secondary battery comprising the aforementioned negative electrode active material.

More specifically, the negative electrode for a lithium secondary battery according to another embodiment of the present invention may include a negative electrode current collector; and a negative electrode active material layer disposed on the negative electrode current collector, wherein the negative electrode active material layer comprises the aforementioned negative electrode active material for a lithium secondary battery.

The negative electrode current collector is not particularly limited as long as it has high electrical conductivity and does not cause chemical changes in the battery. Examples include copper, stainless steel, aluminum, nickel, titanium, sintered carbon, copper or stainless steel surface-treated with carbon, nickel, titanium, or silver, or aluminum-cadmium alloy. The negative electrode current collector may generally have a thickness of 3 to 500 $\mu$m, and similar to the positive electrode current collector, fine surface irregularities may be formed on its surface to enhance the adhesion of the negative electrode active material. It may be used in various forms such as films, sheets, foils, nets, porous bodies, foams, or non-woven fabrics.

The negative electrode active material layer may optionally include a binder and/or a conductive material along with the negative electrode active material.

The binder serves to enhance adhesion between the particles of the negative electrode active material and between the negative electrode active material and the negative electrode current collector. Specific examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated EPDM, styrene-butadiene rubber (SBR), fluororubber, or various copolymers thereof, and mixtures of one or more of these may be used. The binder may be included in an amount of 1 to 30% by weight based on the total weight of the negative electrode active material layer.

The conductive material is used to impart electrical conductivity to the electrode and may be any material that exhibits electronic conductivity without causing chemical changes in the battery. Specific examples include graphite such as natural or artificial graphite; carbon-based materials such as carbon black, acetylene black, ketjen black, channel black, furnace black, lamp black, thermal black, and carbon fibers; metal powders or metal fibers such as copper, nickel, and silver; conductive whiskers such as zinc oxide or potassium titanate; conductive metal oxides such as titanium oxide; or conductive polymers such as polyphenylene derivatives. One or more of these materials may be used alone or in combination. The conductive material may generally be included in an amount of 1 to 30% by weight based on the total weight of the negative electrode active material layer.

The negative electrode for a lithium secondary battery according to an embodiment of the present invention may be manufactured according to conventional methods for preparing negative electrodes, except for the use of the aforementioned negative electrode active material.

Specifically, the negative electrode may be manufactured by applying a composition for forming a negative electrode active material layer, which includes the aforementioned negative electrode active material and optionally a binder, conductive material, and solvent, onto the negative electrode current collector, followed by rolling and drying. In this case, the types and contents of the negative electrode active material, binder, and conductive material are as described above.

The solvent may be any commonly used solvent in the art, such as dimethyl sulfoxide (DMSO), isopropyl alcohol, N-methylpyrrolidone (NMP), acetone, or water, and one or more of these may be used alone or in combination. The amount of solvent used should be sufficient to dissolve or disperse the negative electrode active material, conductive material, and binder, considering the coating thickness of the slurry and the production yield, and to provide a viscosity that allows excellent thickness uniformity during the coating process for electrode fabrication.

Alternatively, the negative electrode may be manufactured by casting the composition for forming the negative electrode active material layer onto a separate support, peeling the resulting film from the support, and laminating the film onto the negative electrode current collector.

Another embodiment of the present invention provides a lithium secondary battery including the above-described negative electrode.

More specifically, the lithium secondary battery according to another embodiment of the present invention may include a positive electrode; a negative electrode disposed to face the positive electrode; a separator interposed between the positive electrode and the negative electrode; and an electrolyte. The negative electrode is as described above. In addition, the lithium secondary battery may optionally further include a battery container that houses an electrode assembly of the positive electrode, the negative electrode, and the separator, and a sealing member for sealing the battery container.

The positive electrode may include a positive electrode current collector and a positive electrode active material layer disposed on the positive electrode current collector, wherein the positive electrode active material layer may include a positive electrode active material. The positive electrode current collector is not particularly limited as long as it has electrical conductivity without causing chemical changes in the battery. Examples include stainless steel, aluminum, nickel, titanium, sintered carbon, or aluminum or stainless steel whose surface is treated with carbon, nickel, titanium, silver, and the like. The positive electrode current collector may typically have a thickness of 3 to 500 $\mu$m, and fine irregularities may be formed on the surface of the positive electrode current collector to enhance the adhesion of the positive electrode active material. It may be used in various forms such as films, sheets, foils, nets, porous bodies, foams, or non-woven fabrics.

As the positive electrode active material, a compound capable of reversibly intercalating and deintercalating lithium (a lithiated intercalation compound) may be used. Specifically, one or more composite oxides of lithium and a metal selected from cobalt, manganese, nickel, and combinations thereof may be used, and specific examples include compounds represented by any one of the following chemical formulas:

$Li_aA_{1-b}B_bD_2$ ($0.90 \leq a \leq 1.8$, and $0 \leq b \leq 0.5$); $Li_aE_{1-b}B_bO_{2-c}D_c$ ($0.90 \leq a \leq 1.8$, $0 \leq b \leq 0.5$, $0 \leq c \leq 0.05$); $LiE_{2-b}B_bO_{4-c}D_c$ ($0 \leq b \leq 0.5$, $0 \leq c \leq 0.05$); $Li_aNi_{1-b-c}Co_bB_cD_\alpha$ ($0.90 \leq a \leq 1.8$, $0 \leq b \leq 0.5$, $0 \leq c \leq 0.05$, $0 < \alpha \leq 2$); $Li_aNi_{1-b-c}Co_bB_cO_{2-\alpha}T_\alpha$ ($0.90 \leq a \leq 1.8$, $0 \leq b \leq 0.5$, $0 \leq c \leq 0.05$, $0 < \alpha < 2$); $Li_aNi_{1-b-c}Co_bB_cO_{2-\alpha}T_2$ ($0.90 \leq a \leq 1.8$, $0 \leq b \leq 0.5$, $0 \leq c \leq 0.05$, $0 < \alpha < 2$); $Li_aNi_{1-b-c}Mn_bB_cD_\alpha$ ($0.90 \leq a \leq 1.8$, $0 \leq b \leq 0.5$, $0 \leq c \leq 0.05$, $0 < \alpha \leq 2$); $Li_aNi_{1-b-c}Mn_bB_cO_{2-\alpha}T_\alpha$ ($0.90 \leq a \leq 1.8$, $0 \leq b \leq 0.5$, $0 \leq c \leq 0.05$, $0 < \alpha < 2$); $Li_aNi_{1-b-c}Mn_bB_cO_{2-\alpha}T_2$ ($0.90 \leq a \leq 1.8$, $0 \leq b \leq 0.5$, $0 \leq c \leq 0.05$, $0 < \alpha < 2$); $Li_aNi_bE_cG_dO_2$ ($0.90 \leq a \leq 1.8$, $0 \leq b \leq 0.9$, $0 \leq c \leq 0.5$, $0.001 \leq d \leq 0.1$); $Li_aNi_bCo_cMn_dGeO_2$ ($0.90 \leq a \leq 1.8$, $0 \leq b \leq 0.9$, $0 \leq c \leq 0.5$, $0 \leq d \leq 0.5$, $0.001 \leq e \leq 0.1$); $Li_aNiG_bO_2$ ($0.90 \leq a \leq 1.8$, $0.001 \leq b \leq 0.1$); $Li_aCoG_bO_2$ ($0.90 \leq a \leq 1.8$, $0.001 \leq b \leq 0.1$); $Li_aMnG_bO_2$ ($0.90 \leq a \leq 1.8$, $0.001 \leq b \leq 0.1$); $Li_aMn_2G_bO_4$ ($0.90 \leq a \leq 1.8$, $0.001 \leq b \leq 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$ ($0 \leq f \leq 2$); $Li_{(3-f)}Fe_2(PO_4)_3$ ($0 \leq f \leq 2$); and $LiFePO_4$.

In the above chemical formulas, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; T is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof.

Of course, it is also possible to use a material having a coating layer on the surface of the above compound, or to use a mixture of the above compound and a compound having a coating layer. The coating layer may include at least one compound of a coating element selected from the group consisting of an oxide of the coating element, a hydroxide of the coating element, an oxyhydroxide of the coating element, an oxycarbonate of the coating element, and a hydroxycarbonate of the coating element. The compounds constituting these coating layers may be amorphous or crystalline. As the coating element included in the coating layer, Mg, Al, Co, K, Na, Ca, Si, Ti, V, Sn, Ge, Ga, B, As, Zr, or a mixture thereof may be used. As for the coating-layer forming process, any coating method may be employed as long as it uses these elements and does not adversely affect the physical properties of the positive electrode active material (for example, spray coating, dip coating, etc.), and this is well understood by those skilled in the art, so a detailed explanation is omitted. The positive electrode active material layer may further include a binder and/or a conductive material together with the above-described positive electrode active material.

The binder serves to improve adhesion between the particles of the positive electrode active material and between the positive electrode active material and the positive electrode current collector. Specific examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated EPDM, styrene-butadiene rubber (SBR), fluororubber, or various copolymers thereof, and one or more of these may be used alone or in combination, but the present invention is not limited thereto. The binder may be included in an amount of 1 to 30% by weight based on the total weight of the positive electrode active material layer.

The conductive material is used to impart conductivity to the electrode and may be used without particular limitation as long as it has electronic conductivity without causing chemical changes in the battery. Specific examples include graphite such as natural or artificial graphite; carbon-based materials such as carbon black, acetylene black, ketjen black, channel black, furnace black, lamp black, thermal black, and carbon fibers; metal powders or metal fibers such as copper, nickel, aluminum, or silver; conductive whiskers such as zinc oxide or potassium titanate; conductive metal oxides such as titanium oxide; or conductive polymers such as polyphenylene derivatives. One or more of these may be used alone or in combination, but the present invention is not limited thereto. The conductive material may generally be included in an amount of 1 to 30% by weight based on the total weight of the positive electrode active material layer.

The positive electrode may be manufactured according to a conventional method for manufacturing positive electrodes.

Specifically, the positive electrode may be produced by applying, onto the positive electrode current collector, a composition for forming a positive electrode active material layer that includes the positive electrode active material and, as needed, optionally a binder, a conductive material, or a solvent, followed by drying and rolling. In this case, the types and contents of the positive electrode active material, binder, and conductive material are as described above.

The solvent may be any solvent commonly used in the art, such as dimethyl sulfoxide (DMSO), isopropyl alcohol, N-methylpyrrolidone (NMP), acetone, or water, and one or more of these may be used alone or in combination. The amount of the solvent only needs to be sufficient to dissolve or disperse the positive electrode active material, the conductive material, and the binder, in view of the coating thickness of the slurry and manufacturing yield, and to provide a viscosity that enables excellent thickness uniformity during the coating process for manufacturing the positive electrode.

Alternatively, the positive electrode may be manufactured by casting the composition for forming the positive electrode active material layer onto a separate support, and then laminating, onto the positive electrode current collector, a film obtained by peeling the cast layer from the support.

The separator separates the positive electrode and the negative electrode and provides a pathway for lithium ions. Any material commonly used as a separator in lithium secondary batteries may be employed without particular limitation, and it is preferable that the separator exhibits low resistance to ion movement of the electrolyte and excellent electrolyte wettability. Specifically, a porous polymer film, for example a polyolefin-based polymer film produced from an ethylene homopolymer, propylene homopolymer, ethylene/butene copolymer, ethylene/hexene copolymer, or ethylene/methacrylate copolymer, or a multilayer structure of two or more of these, may be used. In addition, conventional porous non-woven fabrics, for example non-woven fabrics made of high-melting-point glass fibers or polyethylene terephthalate fibers, may also be used. Furthermore, to ensure heat resistance or mechanical strength, a coated separator containing a ceramic component or a polymer material may be used, optionally in a single-layer or multi-layer structure.

The electrolyte may include, without limitation, an organic liquid electrolyte, an inorganic liquid electrolyte, a solid polymer electrolyte, a gel-type polymer electrolyte, a solid inorganic electrolyte, or a molten inorganic electrolyte that can be used in manufacturing lithium secondary batteries.

Specifically, the organic liquid electrolyte may include an organic solvent and a lithium salt.

The organic solvent may be used without particular limitation as long as it can serve as a medium through which ions involved in the electrochemical reactions of the battery can migrate. Specific examples of the organic solvent include ester-based solvents such as methyl acetate, ethyl acetate, $\gamma$-butyrolactone, and $\varepsilon$-caprolactone; ether-based solvents such as dibutyl ether or tetrahydrofuran; ketone-based solvents such as cyclohexanone; aromatic hydrocarbon-based solvents such as benzene or fluorobenzene; carbonate-based solvents such as dimethyl carbonate (DMC), diethyl carbonate (DEC), methylethyl carbonate (MEC), ethylmethyl carbonate (EMC), ethylene carbonate (EC), and propylene carbonate (PC); alcohol-based solvents such as ethanol or isopropyl alcohol; nitriles such as R-CN (where R is a $C_2$ to $C_{20}$ linear, branched, or cyclic hydrocarbon group and may include a double-bonded aromatic ring or an ether linkage); amides such as dimethylformamide; dioxolanes such as 1,3-dioxolane; or sulfolanes. Among these, carbonate-based solvents are preferred, and a mixture of a cyclic carbonate having high ionic conductivity and high dielectric constant capable of enhancing charge/discharge performance (e.g., ethylene carbonate or propylene carbonate) and a linear carbonate compound having low viscosity (e.g., ethylmethyl carbonate, dimethyl carbonate, or diethyl carbonate) is more preferred. In this case, the cyclic carbonate and the chain carbonate may be mixed at a volume ratio of about 1:1 to about 1:9 to provide excellent electrolyte performance.

The lithium salt may be used without particular limitation as long as it is a compound capable of providing lithium ions used in lithium secondary batteries. Specific examples of the lithium salt include $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_3SO_2)_2$, $LiN(CF_3SO_2)_2$, LiCl, LiI, or $LiB(C_2O_4)_2$. The concentration of the lithium salt is preferably in the range of 0.1 to 2.0 M. When the concentration of the lithium salt is within the above range, the electrolyte may exhibit excellent performance due to appropriate conductivity and viscosity, and lithium ions can move effectively.

In addition to the electrolyte components, one or more additives may further be included in the electrolyte for purposes such as improving lifespan characteristics of the battery, suppressing capacity fade, or enhancing discharge capacity. Examples include haloalkylene carbonate compounds such as difluoroethylene carbonate, pyridine, triethyl phosphite, triethanolamine, cyclic ethers, ethylenediamine, n-glyme, hexamethylphosphoramide, nitrobenzene derivatives, sulfur, quinone imine dyes, N-substituted oxazolidinones, N,N-substituted imidazolidines, ethylene glycol dialkyl ethers, ammonium salts, pyrrole, 2-methoxyethanol, or aluminum trichloride. In this case, the additive may be included in an amount of 0.1 to 5% by weight based on the total weight of the electrolyte.

Hereinafter, embodiments of the present invention will be described in greater detail with reference to examples. However, the following examples are merely preferred embodiments of the present invention, and the present invention is not limited thereto.

**Example 1**

(1) **Preparation of Negative Electrode Active Material**

(Preparation of Natural Graphite Powder)

A primary-spheronized natural graphite powder having an average particle diameter ($D_{50}$) of 17 $\mu$m was prepared.

(Heat Treatment)

Subsequently, the natural graphite powder was heat-treated at 600°C for 10 hours under a nitrogen atmosphere.

(Mixing)

Thereafter, silicon fine particles were further mixed as a silicon-based active material to prepare a negative electrode active material.

(2) **Preparation of Negative Electrode**

The prepared negative electrode active material, a conductive agent, a binder of styrene-butadiene rubber (SBR), and a thickener of carboxymethyl cellulose (CMC) were mixed at a mass ratio of 96:1:1.5:1.5, dispersed in deionized water, and used to prepare a negative electrode active material slurry composition. The composition was applied onto a copper (Cu) foil current collector, dried, and rolled to fabricate a negative electrode having an electrode density of 1.10 $\pm$ 0.05 g/cm$^3$.

(3) **Fabrication of Lithium Secondary Battery**

A coin-type 2032 half-cell was fabricated using the prepared negative electrode as the working electrode and a lithium metal foil as the counter electrode. A porous polypropylene (PP) film was inserted as a separator between the working and counter electrodes, and an electrolyte was used which was a mixed solution of diethyl carbonate (DEC) and ethylene carbonate (EC) at a volume ratio of 7:3, in which 1 M LiPF$_6$ was dissolved.

**Example 2**

A negative electrode active material, negative electrode, and lithium secondary battery were prepared in the same manner as in Example 1, except that the natural graphite powder was heat-treated at 600°C for 5 hours under a nitrogen atmosphere.

**Example 3**

A negative electrode active material, negative electrode, and lithium secondary battery were prepared in the same manner as in Example 1, except that the natural graphite powder was heat-treated at 650°C for 10 hours under a nitrogen atmosphere.

**Comparative Example 1**

A negative electrode active material, negative electrode, and lithium secondary battery were prepared in the same manner as in Example 1, except that instead of heat-treating the natural graphite powder having an average particle diameter ($D_{50}$) of 17 $\mu$m, the natural graphite powder and petroleum pitch were mixed at a weight ratio of 100:5, mechanically mixed in a high-speed mixer at 2000 rpm for 10 minutes, and then heat-treated at 1200°C for 5 hours under a nitrogen atmosphere.

**Comparative Example 2**

A negative electrode active material, negative electrode, and lithium secondary battery were prepared in the same manner as in Comparative Example 1, except that the natural graphite powder and petroleum pitch were mixed at a weight ratio of 100:8.

**Comparative Example 3**

A negative electrode active material, negative electrode, and lithium secondary battery were prepared in the same manner as in Comparative Example 1, except that natural graphite having an average particle diameter ($D_{50}$) of 6 $\mu$m was used.

**Comparative Example 4**

A negative electrode active material, negative electrode, and lithium secondary battery were prepared in the same manner as in Example 1, except that no heat treatment was performed after preparing the natural graphite powder.

**Experimental Example 1: Evaluation of Physical Properties of Negative Electrode Active Materials**

The physical properties of the negative electrode active materials prepared according to the Examples and Comparative Examples were evaluated as described below, and the results are shown in Tables 1 and 2.

**(1) Evaluation of Particle Size ($D_{10}$, $D_{50}$, $D_{90}$)**

The particle size distribution of the active material powders was measured using a laser diffraction method to determine $D_{10}$, $D_{50}$, and $D_{90}$ values. $D_{10}$, $D_{50}$, and $D_{90}$ represent particle diameters corresponding to 10%, 50%, and 90% of cumulative volume, respectively, on the particle size distribution curve.

**(2) Evaluation of Tap Density**

In accordance with ASTM B527, 15 g of the active material powder was placed in a 50 mL container and tapped at 3000 cycles @ 284 cycles/min to measure the packing density.

**(3) Evaluation of Compression Density and Equation 1**

2 g of the active material powder was placed in a circular mold having a diameter of 2 $cm^2$ and compressed under an applied pressure of 5.5 $kgf/cm^2$, and the compression density was measured using a density analyzer (Micromeritics, GeoPyc 1360). The difference between the measured compression density and tap density was then calculated to obtain the value of Equation 1.

**(4) Evaluation of Specific Surface Area**

The specific surface area of the active material powder was measured using a BET method with a Surface Area and Porosity Analyzer (Micromeritics, ASAP 2020).

**(5) Evaluation of Oil Absorption**

The oil absorption of the active material powder was measured by adding 30 g of the powder and linseed oil (ASAHI SOUKEN, S-500).

**(6) Evaluation of pH**

10 g of the active material powder was dispersed in 100 mL of distilled water using an ultrasonic cleaner for 30 minutes, and the pH of the separated supernatant was measured using a pH meter (Metrohm, 780 pH meter).

[Table 1]

| | D10 ($\mu$m) | D50 ($\mu$m) | D90 ($\mu$m) | Tap Density ($g/cm^3$) | Compression Density ($g/cm^3$) | Equation 1 ($g/cm^3$) |
|---|---|---|---|---|---|---|
| Example 1 | 11.4 | 18.7 | 29.8 | 0.92 | 1.00 | 0.08 |
| Example 2 | 11.3 | 18.4 | 29.7 | 0.93 | 1.01 | 0.08 |
| Example 3 | 11.0 | 18.1 | 29.4 | 0.92 | 1.00 | 0.08 |
| Comparative example 1 | 11.6 | 18.8 | 28.4 | 1.07 | 1.08 | 0.01 |
| Comparative example 2 | 11.6 | 19.4 | 30.5 | 1.09 | 1.08 | 0.01 |
| Comparative example 3 | 5.2 | 7.3 | 10.5 | 1.10 | 1.12 | 0.02 |

(continued)

|  | D10 (μm) | D50 (μm) | D90 (μm) | Tap Density (g/cm$^3$) | Compression Density (g/cm$^3$) | Equation 1 (g/cm$^3$) |
|---|---|---|---|---|---|---|
| Comparative example 4 | 12.5 | 20.0 | 32.3 | 0.91 | 1.00 | 0.09 |

[Table 2]

|  | BET (m$^2$/g) | Oil absorption (mL/100g) | pH |
|---|---|---|---|
| Example 1 | 4.86 | 52.7 | 7.3 |
| Example 2 | 4.84 | 51.9 | 7.1 |
| Example 3 | 4.87 | 52.1 | 7.3 |
| Comparative example 1 | 2.23 | 46.1 | 7.0 |
| Comparative example 2 | 2.16 | 39.5 | 7.1 |
| Comparative example 3 | 4.47 | 45.0 | 7.0 |
| Comparative example 4 | 4.79 | 51.6 | 4.9 |

Referring to Tables 1 and 2, it was confirmed that in the Examples, the values of Equation 1, BET specific surface area, oil absorption, and pH were appropriately obtained within the ranges defined by the present invention.

In contrast, in Comparative Examples 1 to 3, which involved coating treatment without performing heat treatment under a nitrogen atmosphere, the values of Equation 1, BET specific surface area, and oil absorption were smaller compared to those of the Examples.

Furthermore, in Comparative Example 4, where neither heat treatment under a nitrogen atmosphere nor coating treatment was performed, the value of Equation 1 was significantly greater than that of the Examples, while the BET specific surface area, oil absorption, and pH were smaller compared to those of the Examples.

**Experimental Example 2: Evaluation of Electrochemical Characteristics of Lithium Secondary Batteries**

The electrochemical characteristics of the lithium secondary batteries prepared according to the Examples and Comparative Examples were evaluated, and the results are shown in **Table 3** and **Figure 1.** The specific experimental methods were as follows.

**(1) Evaluation of Initial Discharge Capacity and Initial Efficiency**

After assembling the CR2032 coin-type half-cells of the lithium secondary batteries, the cells were aged at 25°C for 30 hours and then subjected to charge/discharge testing.

For the evaluation of initial capacity, a theoretical capacity of 500 mAh/g was used as the reference capacity. Charging was performed at a constant current of 0.1C to 5 mV, followed by constant voltage charging until the cut-off current reached 0.005C. After charging, a rest period of 10 minutes was applied, and then discharge was performed at a constant current of 0.1C to 1.0 V based on the reference capacity of 500 mAh/g.

**(2) Evaluation of Negative Electrode Volume Expansion Ratio (%)**

The thickness of the negative electrode was measured before cell assembly. Then, CR2032 coin-type half-cells were assembled and aged at 25°C for 30 hours, followed by charge/discharge testing.

For evaluating expansion characteristics, charging was conducted at a constant current of 0.5C to 5 mV, followed by constant voltage charging until the current decreased to 0.005C. After a 10-minute rest period, discharge was performed at a constant current of 0.5C to 1.2 V based on a reference capacity of 500 mAh/g, for 30 cycles.

After completing the 30 cycles, charging was again performed at a constant current of 0.5C to 5 mV, followed by constant voltage charging until the current reached 0.005C. The cell was then disassembled, and the electrode was washed for 5 minutes with dimethyl carbonate (DMC) solvent. The electrode thickness was measured, and the volume expansion ratio of the negative electrode was calculated according to the following formula:

Volume Expansion Ratio (%) = (Electrode thickness after 30 cycles - Initial electrode thickness)/( Initial electrode thickness) X 100                    <Equation 1>

**(3) Evaluation of Cycle-Life Characteristics (30-Cycle Retention, %)**

Cycle-life performance was evaluated at 25°C by charging at a constant current of 0.5C to 5 mV, followed by constant voltage charging until the current decreased to 0.005C. After a 10-minute rest period, discharge was carried out at a constant current of 0.5C to 1.2 V.

Charge/discharge cycling was repeated 30 times under these conditions, and the capacity retention ratio (%) was calculated as the ratio of the discharge capacity at the 30th cycle to that at the first cycle.

[Table 3]

|  | Initial Discharge Capacity (mAh/g) | Initial Efficiency (%) | Volume Expansion Ratio (%) | Cycle-Life (30cycle, %) |
|---|---|---|---|---|
| Example 1 | 415.0 | 87.8 | 21.1 | 81.8 |
| Example 2 | 413.2 | 87.3 | 21.8 | 79.7 |
| Example 3 | 415.6 | 87.0 | 21.5 | 81.2 |
| Comparative example 1 | 384.3 | 83.3 | 25.6 | 64.5 |
| Comparative example 2 | 381.7 | 82.7 | 27.7 | 70.1 |
| Comparative example 3 | 385.7 | 86.8 | 24.4 | 49.9 |
| Comparative example 4 | 402.7 | 87.9 | 22.8 | 79.0 |

Referring to Table 3, it was confirmed that in the Examples, where the physical properties of the negative electrode active material-such as the value of Equation 1-were properly controlled within the ranges defined by the present invention, the capacity, initial efficiency, volume expansion ratio, and cycle-life characteristics were all implemented with excellent performance.

In contrast, in Comparative Examples 1 to 4, where the physical properties such as the value of Equation 1 deviated from the ranges defined by the present invention, the capacity, initial efficiency, volume expansion ratio, and/or cycle-life characteristics were generally inferior compared to those of the Examples.

Although the preferred embodiments of the present invention have been described above in detail, it should be understood that the present invention is not limited thereto, and various modifications and changes may be made by those skilled in the art without departing from the spirit and scope of the invention as defined by the appended claims, the detailed description of the invention, and the accompanying drawings.

Accordingly, the true scope of protection of the present invention shall be defined by the appended claims and their equivalents.

**Claims**

1. A negative electrode active material for a lithium secondary battery, comprising natural graphite, wherein the natural graphite satisfies the following Equation 1:

[Equation 1]

$$0.04 \text{ g/cm}^3 \leq D_{press} - D_{tap} \leq 0.085 \text{ g/cm}^3$$

wherein $D_{press}$ represents the compression density of the natural graphite under an applied pressure of 5.5 kgf/cm$^2$, and $D_{tap}$ represents the tap density of the natural graphite.

2. The negative electrode active material for a lithium secondary battery according to claim 1, wherein the pH of the natural graphite is 7.0 or higher.

3. The negative electrode active material for a lithium secondary battery according to claim 1, wherein the natural graphite does not include a coating layer containing a low-crystallinity carbon material on a surface thereof.

4. The negative electrode active material for a lithium secondary battery according to claim 1, wherein the natural graphite has a BET specific surface area of 4.8 m$^2$/g or greater.

5. The negative electrode active material for a lithium secondary battery according to claim 1, wherein the natural graphite has an oil absorption of 50.0 mL/100 g or greater.

6. The negative electrode active material for a lithium secondary battery according to claim 1, wherein the natural graphite has an average particle diameter ($D_{50}$) of from 16.0 μm to 21.0 μm.

7. The negative electrode active material for a lithium secondary battery according to claim 1, wherein the tap density of the natural graphite is 0.95 g/cm$^3$ or less.

8. The negative electrode active material for a lithium secondary battery according to claim 1, wherein the natural graphite has a sphericity of 0.85 or greater.

9. The negative electrode active material for a lithium secondary battery according to claim 1, further comprising a silicon-based active material.

10. The negative electrode active material for a lithium secondary battery according to claim 9, wherein the silicon-based active material is silicon, a silicon-carbon composite, silicon oxide, or a combination thereof.

11. A method for manufacturing a negative electrode active material for a lithium secondary battery, comprising:

preparing a natural graphite powder; and
heat-treating the natural graphite powder at a temperature of 500°C to 650°C under an inert gas atmosphere.

12. The method for manufacturing a negative electrode active material for a lithium secondary battery according to claim 11, wherein the inert gas is nitrogen.

13. The method for manufacturing a negative electrode active material for a lithium secondary battery according to claim 11, wherein the heat treatment is performed for 1 hour to 12 hours.

14. The method for manufacturing a negative electrode active material for a lithium secondary battery according to claim 11, further comprising, after the heat-treating step, mixing a silicon-based active material.

15. The method for manufacturing a negative electrode active material for a lithium secondary battery according to claim 11, wherein the silicon-based active material is silicon, a silicon-carbon composite, silicon oxide, or a combination thereof.

16. A negative electrode for a lithium secondary battery comprising the negative electrode active material according to any one of claims 1 to 10.

17. A lithium secondary battery comprising the negative electrode for a lithium secondary battery according to claim 16.

## INTERNATIONAL SEARCH REPORT

| International application No. |
| --- |
| **PCT/KR2024/007027** |

| A. | CLASSIFICATION OF SUBJECT MATTER |
| --- | --- |

**H01M 4/583**(2010.01)i; **H01M 4/36**(2006.01)i; **H01M 4/48**(2010.01)i; **H01M 4/587**(2010.01)i; **H01M 4/38**(2006.01)i; **C01B 32/21**(2017.01)i; **H01M 4/133**(2010.01)i; **H01M 4/134**(2010.01)i; **H01M 10/052**(2010.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/583(2010.01); C01B 31/04(2006.01); C01B 32/21(2017.01); H01M 10/05(2010.01); H01M 10/0525(2010.01); H01M 4/133(2010.01); H01M 4/1393(2010.01); H01M 4/485(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬이차전지(lithium secondary battery), 음극(anode), 활물질(active material), 천연 흑연(natural graphite), 압축 밀도(compressed density), 탭 밀도(tap density)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 101800304 B (CHINA THREE GORGES UNIVERSITY et al.) 07 March 2012 (2012-03-07) See claims 1 and 6; and paragraphs [0002] and [0026]. | 1-5,8,11-13,16,17 |
| Y | | 6,7,9,10,14,15 |
| Y | KR 10-2019-0136382 A (SK INNOVATION CO., LTD.) 10 December 2019 (2019-12-10) See claims 1-3, 8 and 9; and paragraph [0110]. | 6,7,9,10,14,15 |
| A | JP 4701484 B2 (SUMITOMO METAL IND. LTD. et al.) 15 June 2011 (2011-06-15) See claims 1-5; and paragraph [0003]. | 1-17 |
| A | KR 10-2413434 B1 (POSCO CHEMICAL CO., LTD.) 24 June 2022 (2022-06-24) See claims 8-14, 16, 25 and 26. | 1-17 |
| A | KR 10-1609406 B1 (MITSUBISHI CHEMICAL CORPORATION) 05 April 2016 (2016-04-05) See claims 1, 3, 6 and 9-13. | 1-17 |

☐ Further documents are listed in the continuation of Box C.   ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **04 September 2024** | **04 September 2024** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2024/007027**

| Patent document cited in search report | | | Publication date (day/month/year) | Patent family member(s) | | | Publication date (day/month/year) |
|---|---|---|---|---|---|---|---|
| CN | 101800304 | B | 07 March 2012 | CN | 101800304 | A | 11 August 2010 |
| KR | 10-2019-0136382 | A | 10 December 2019 | KR | 10-2586846 | B1 | 11 October 2023 |
| JP | 4701484 | B2 | 15 June 2011 | JP | 2002-075362 | A | 15 March 2002 |
| KR | 10-2413434 | B1 | 24 June 2022 | KR | 10-2021-0115461 | A | 27 September 2021 |
| KR | 10-1609406 | B1 | 05 April 2016 | CN | 102203989 | A | 28 September 2011 |
| | | | | CN | 102203989 | B | 14 May 2014 |
| | | | | EP | 2352192 | A1 | 03 August 2011 |
| | | | | EP | 2352192 | A4 | 15 January 2014 |
| | | | | EP | 2352192 | B1 | 01 June 2016 |
| | | | | JP | 2010-135314 | A | 17 June 2010 |
| | | | | JP | 5440099 | B2 | 12 March 2014 |
| | | | | KR | 10-2011-0084883 | A | 26 July 2011 |
| | | | | US | 2011-0262802 | A1 | 27 October 2011 |
| | | | | US | 8697285 | B2 | 15 April 2014 |
| | | | | WO | 2010-050595 | A1 | 06 May 2010 |

Form PCT/ISA/210 (patent family annex) (July 2022)